(19)

Europäisches
Patentamt
European
Patent Office
Office européen
des brevets

(11) **EP 2 131 292 A1**

(12) **EUROPEAN PATENT APPLICATION**

(43) Date of publication:
**09.12.2009 Bulletin 2009/50**

(51) Int Cl.:
***G06F 17/30*** *(2006.01)*

(21) Application number: **08157818.9**

(22) Date of filing: **06.06.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **NTT DoCoMo, Inc.
Tokyo (JP)**

(72) Inventors:
 • **Fahrmair, Michael
  81375 Munich (DE)**

• **Kellerer, Wolfgang
 82256, Fuerstenfeldbruck (DE)**
• **Roemer, Kay
 8038 Zurich (CH)**
• **Ostermaier, Benedikt
 8304 Wallisellen (CH)**
• **Mattern, Friedemann
 8006, Zurich (CH)**

(74) Representative: **Betten & Resch
Patentanwälte
Theatinerstrasse 8
(Fünf Höfe)
80333 München (DE)**

(54) **Method and apparatus for searching a plurality of realtime sensors**

(57)    A method for searching a plurality of realtime sensors based on an inputted search condition including a sensor value to find those sensors where the realtime sensor value read by the sensor matches with the search condition, said method comprising:
based on a prediction model which predicts future sensor values based on sensor values measured in the past, performing a prediction for the sensor value and selecting those sensors whose predicted sensor values match with the search condition,
reading the actual realtime sensor values of those sensors which were selected based on said prediction values; and
returning those sensors and/or their sensor values for which the read actual realtime sensor values match with the search condition.

Fig. 1

## Description

### FIELD OF INVENTION

The present invention relates to a method and an apparatus for searching a plurality of realtime sensors.

### BACKGOUND OF THE INVENTION

An increasing number of sensors are currently being connected to the Internet, providing real-time information of real world states. Such sensors can range from hardware sensors like hobbyist's weather stations or large deployments of dedicated sensor networks to software sensors that publish content from arbitrary software services outside the service boundaries as so called context. Examples for such software sensors are online status of instant messengers, realtime news tickers, micro blogging content, e.g. from Twitter about emotional states or current thoughts or just classic system management information like CPU load, memory usage or network throughput, e.g. from SNMP-enabled routers. As sensor networks and context publishing are becoming mainstream, one may expect a wealth of different real time information to become available on-line. The published data may be linked with arbitrary information, creating an interconnected Web of sensor readings called the Sensor Web, which can in principle be utilized by every interested party, much like the World Wide Web is being used today. Using real-time sensor data enables novel applications and services, like the integration of live traffic information into modern car navigation systems, for example.

A key service of a future Sensor Web is the search for sensed information, much like search engines are a key service for the current World Wide Web. Here, one may not only be interested in sensors conforming to certain meta-information, like the place of the sensor, but one may actually want to search for sensors based on their current readings. For example, users may be interested in searching for restaurants which are currently calm and quiet. Unlike documents indexed by conventional search engines, such as web pages or pictures, sensor data is more structured and is expected to change at much higher frequencies, rendering the usual indexing approaches of search engines useless.

Currently, there is no existing solution to dynamically search/discover arbitrary information about the real world in real time on a content basis, for example to get a list of all locations in a city that share a certain temperature or noise level.

Such queries are inherently difficult to conduct. This is first because dynamic content changes often which makes it inefficient to publish the content opportunistically (i.e. every node monitors every possible sensor for the values it is interested in) in larger scale networks. Similarly, it is inefficient to monitor all sensor traffic and resolve all queries in a centralistic approach because this basically would mean to mirror the complete innovative (i.e., all theoretical input) network traffic into a singularity. Search engines for internet web-pages work according to this approach. However, there the sampling frequency is reduced below the possible updating frequency of the web-pages (between several hours and several moths), which means first that the content delivered by a query can be already outdated, i.e., changes can not be reflected in real-time. Second, it can mean that value-changes between two sampling frames are totally omitted.

The second problem of searching dynamic real world information is that locations of sensors could possible change if sensor platforms can be mobile (for example mobile phones). This means not only the sensor readings itself change but also their real world relation has to be updated.

It is therefore desirable to have a technology which enables the search of a sensor network or the "sensor web", particularly to enable a search based on the actual sensor values as search conditions.

### SUMMARY OF THE INVENTION

According to one embodiment there is provided a method for searching a plurality of realtime sensors based on an inputted search condition including a sensor value to find those sensors where the realtime sensor value read by the sensor matches with the search condition, said method comprising:

> based on a prediction model which predicts future (or present) sensor values based on sensor values measured in the past, performing a prediction for the sensor value and selecting those sensors whose predicted sensor values match with the search condition;
> reading the actual realtime sensor values of those sensors which were selected based on said prediction values; and
> returning those sensors and/or their sensor values for which the read actual realtime sensor values match with the search condition.

The usage of a prediction of future sensor values based on past measurements makes an advantageous effect possible. It makes it possible to limit the number of sensors which actually have to be read by selecting only those for actual reading which based on the prediction may be considered as "promising". Furthermore, by verifying the prediction through reading the actual value of the sensor only those sensors are returned where the actual values match with the query.

It should be understood that the term "future sensor values" relates to values which are in the future relative to the values measured in the past. Therefore also "present" sensor values may in this sense be "future values" because they are in future compared to the past measured values on which the prediction for "present" values is made.

Generally speaking, in this manner a computer-implemented search for sensors whose values match with a searching condition becomes possible. In this way, a search for real-world entities such as things or locations are possible if they are linked or associated with the sensors. E.g. if the sensor has an associated location and the search condition is matched, this means that the search has found a location (a real world entity) where the dynamic realtime search condition (e.g. temperature) is fulfilled. Similarly not only locations but items which are associated with a sensor and its realtime values can be found through the search method or search engine using this principle.

According to one embodiment instead of reading the actual realtime sensor values only the sensors for which the predicted sensor value matches with the search condition, preferably together with the predicted values, are returned in response to a search query. This enables a search which actually is directed to the future, such as searching those sensors where one may expect at a certain time in the future that they assume a certain value as defined in the query, which opens a completely new searching dimension.

According to one embodiment said prediction model in addition to the predicted sensor value returns a probability for the correctness of the prediction, and further comprising:

using said probability for giving a higher priority to those sensors for which the probability is higher compared to those sensors for which the probability is lower.

This reduces the computational efforts for the actual matching process by introducing the probability of correctness as a selection criterion.

According to one embodiment the method further comprises:

calculating for each of said plurlity of sensors a predicted sensor value and a ranking parameter for ranking the predictions based on the ranking parameter;
ranking the sensors for which the predicted value matches with the search condition according to their ranking parameters; and
reading the actual sensor values in accordance with the ranking of the sensors; wherein said ranking parameter comprises one of the following:

a probability for the correctness of the prediction;
a confidence value indicating the accuracy of past predictions;
a parameter based on probability for the correctness of the prediction and a confidence value indicating the accuracy of past predictions.

The ranking according to probability and/or confidence value enables an easy selection of "hits".

According to one embodiment said search condition includes an indication of a time t, said method further comprising:

predicting the sensor values of said plurality of sensors for said time t together with a probability of correctness of the prediction;
ranking the predicted sensor values which match with said sensor value included in said search condition according to their corresponding probability; and
returning those sensors for which the predicted search values match with the sensor value of the search condition based on said ranking.

This enables searches which are directed to a distinct time in the future.

According to one embodiment said sensor value inputted into said search condition may take the form of a value range, and/or wherein
a match between a sensor value included in said search condition and a predicted sensor value is said to have been found if the difference between said predicted value and the sensor value of said search condition lies within a certain range of tolerance.

This increases the flexibility of the search process.

According to one embodiment the method further comprises:

precomputing the predicted sensor values and/or their corresponding probabilities of correctness of the prediction for a certain time horizon; and
matching a search criterion against said precomputed values to obtain said search results.

This reduces the computational burden for actually performing a matching procedure.

According to one embodiment the method further comprises:

building an index by searching webpages to find webpages which contain information about sensors and to extract such information including a prediction model for the corresponding to the sensor; and
ordering said information about said sensors including said prediction models to thereby build an index of sensors and their corresponding prediction models.

In this manner the web can be used to build a search index.

According to one embodiment those sensors for which the prediction accuracy is lower are indexed more frequently than those for which the prediction accuracy is higher.

This increases the accuracy of the procedure as a whole.

According to one embodiment the method further comprises:

selecting those sensors for which the static parts of the search query match, and based on the results selecting those sensors for which the dynamic search conditions are met.

This enhances the performance of the search engine. Static parts may e.g. the type of the sensor (such as temperature sensor, pressure sensor, or any other type of sensor), and the dynamic search conditions relate to the actual values sensed by the sensors. The matching of the static parts may be regarded as a pre-filtering, and then for the reduced set of data which then includes only those sensors which match with the static parts of the search condition a dynamic search (which is more resource demanding) is performed.

According to one embodiment the method further comprises:

ranking the final results returned in response to the query based on a confidence value which indicates for each sensor how accurate the prediction has been in the past.

This enables a ranking of the final results based on the accuracy of the sensor prediction models.

According to one embodiment the method further comprises:

calculating a stability value calculated which indicates the probability that the predicted value will not change over time, and
ranking the final results returned in response to the query based on said stability value.

This enables a ranking of the final results based on the calculated stability of the prediction.

According to one embodiment there is provided an apparatus for searching a plurality of realtime sensors based on an inputted search condition including a sensor value to find those sensors where the realtime sensor value read by the sensor matches with the search condition, said apparatus comprising:

a module for performing based on a prediction model which predicts future sensor values based on sensor values measured in the past a prediction for the sensor value and selecting those sensors whose predicted sensor values match with the search condition
a module for reading the actual realtime sensor values of those sensors which were selected based on said prediction values; and
a module for returning those sensors and/or their sensor values for which the read actual realtime sensor values match with the search condition.

In this manner a search engine for realtime sensors can be implemented.

According to one embodiment the method further comprises:

a module for performing a method according to one of the embodiments of the invention.

According to one embodiment there is provided a computer program comprising computer program code which when being executed on a computer enables said computer to carry out a method according to one of the embodiments of the invention.

## DESCRIPTION OF THE DRAWINGS

Fig. 1 schematically illustrates a sensor according to an embodiment of the invention.
Fig. 2 schematically illustrates a searching operation according to an embodiment of the invention.
Fig. 3 schematically illustrates a prediction operation according to an embodiment of the invention.
Fig. 4 schematically illustrates an architecture of an embodiment of the invention.

## DETAILED DESCRIPTION

The integration of multiple, heterogeneous sensors and sensor networks with the Internet, called Sensor Internet or Sensor Web, is a current trend in sensor networks. This concept enables the publishing of sensor data of different sensor installations via a unified interface, which in turn enables users to browse the data using a Web interface or applications like search engines to access the provided data easily.
Several projects focus on providing such a central repository or access for sensor readings, like Nokia SensorPlanet (see e.g. http://www.sensorplanet.org/) or CENS SensorBase http://sensorbase.org), SenseWeb (see e.g. http://research.microsoft.com/nec/senseweb/) and GSN(see e.g. http://gsn.sourceforge.net/). SensorScope, an environmental monitoring network by the EPFL (see e.g. http://sensorscope.epfl.ch) provides a sophisticated web-based front-end to past and current sensor data for all sensor network installations of the project.
There are some scientific papers which address the problem of search in sensor networks. One example is Okadome, T., Hattori, T., Hiramatsu, K., and Yanagisawa, Y. A real-world event search system in sensor network environments in MDM '06: Proceedings of the 7th International Conference on Mobile Data Management (MDM'06) (Washington, DC, USA, 2006), IEEE Computer Society, p. 62. Another example is Reddy, S., Chen, G., Fulkerson, B., Kim, S. J., Park, U., Yau, N., Cho, J.,

and Mark Hansen, J. H. Sensor-internet share and search-enabling collaboration of citizen scientists. In Proceedings of the ACM Workshop on Data Sharing and Interoperability on the World-wide Sensor Web (Cambridge, Mass., USA, April 2007), ACM, pp. 11-16. A third example is Wong, J. L., and Potkonjak, M. Search in sensor networks: Challenges, techniques, and applications. In IEEE International Conference on Acoustics, Speech, and Signal Processing (2002), vol. IV, IEEE Press, pp. 3752-3755.

However, so far there is no solution which goes into the direction of indexing dynamic data. All these solutions are based on preselecting a small set of sensors or filtering of sensor information based on static meta data (e.g., sensor type).

In real life there are a lot of values of sensors that show a generic repeating behavior (basically everything that is related to human behavior. Since our time is organized in repeating patterns (day, night, weekday, weekend, morning, evening etc.) a lot of real world values we influence show repeating behavior, too). Such repeating patterns open the possibility to predict a behavior of a sensor (or its sensed values) and to make use of such a prediction for enabling the searching of a sensor network in realtime as will become more apparent from the following description.

According to one embodiment there are provided a system and a method that allow for searching rapidly changing dynamic information, even on a large scale, in real-time. The key challenges of such a search engine for sensors are the need to scale to large numbers of sensors and queries, as well as the dynamic nature of sensor data. Traditional search engines are based on the assumption that searchable content is static or changes rather infrequently, enabling efficient indexing strategies. In contrast, sensor data changes at high frequency, such that an index would be outdated as soon as it has been built.

To address this problem, according to one embodiment the proposed mechanism relies on prediction models which allow forecasting a future value of a sensor knowing its past values. Assuming that such models allow forecasting for a substantial amount of time, one can build an index of these models (rather than of the actual sensor values). A search engine may then access the indexed (or ordered) prediction models, check the value given in the search term as to whether it matches with the predicted value derived by the model, and if so, the sensor is chosen as one of those for which it may make sense to read the actual instantaneous sensor value. If the resulting sensor value also matches with the condition defined in the search term, a "hit" has been found.

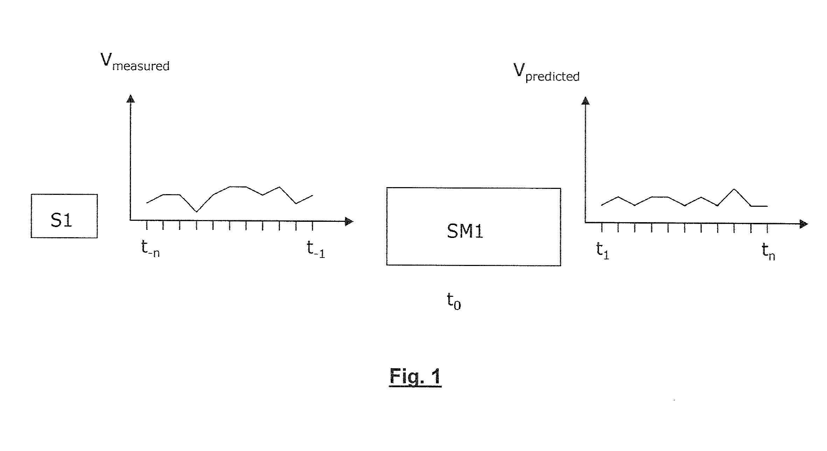

This will now be explained in somewhat more detail with reference to the figures. Fig. 1 shows a sensor which measures realtime values $V_{measured}$ at times from tn to $t_{(n-1)}$. These measured values of the past are then inputted into a prediction model $SM_1$ which is able to calculate predicted values Vpredicted as those measured sensor values which one may expect to be measured at future times $t_1$ to $t_n$. For such a prediction any standard prediction algorithm known in the art may be used.

The prediction starts e.g. at time to and is made for future time values of $t_1$ to $t_n$, where the concrete prediction horizon and the time difference between two prediction intervals $t_n$ and $t_{n+1}$ may be chosen appropriately as desired, depending e.g. on the actually used prediction model, and the sensor type.

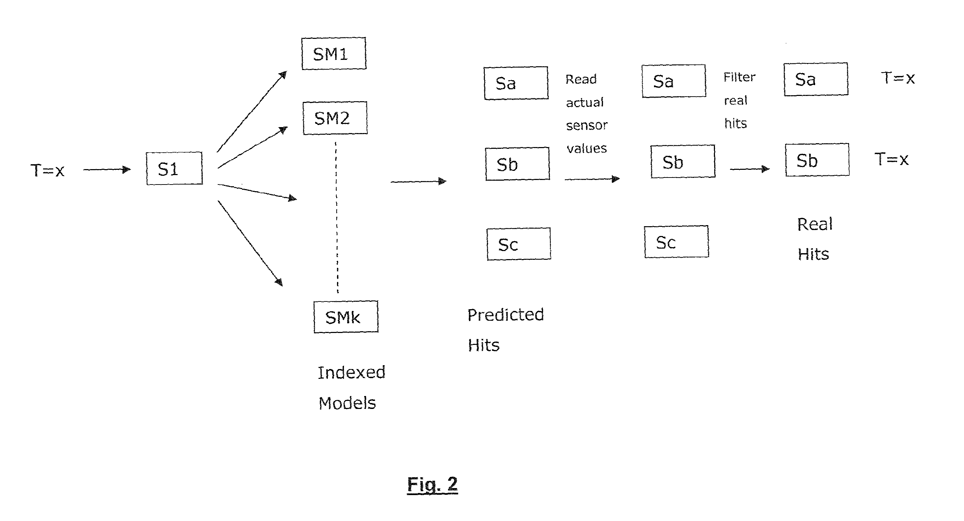

Assume now that there are a plurality of sensors $S_1$ to $S_k$. Then these sensors (or their corresponding prediction models) may be ordered (or indexed) as shown in Fig. 2, where the prediction models $SM_1$ to $SM_k$ of k sensors $S_1$ to $S_k$ are ordered or indexed.

Assume now just as an example that the sensors $S_1$ to $S_k$ are temperature sensors which measure a temperature T. As shown in Fig. 2, a search interface SI may now receive a search query which contains as a search condition a temperature value of T=x. Assume further that this search query is entered at a time tn after the time to when the prediction starts.

The search interface now in one embodiment asks the prediction models $SM_1$ to $SM_k$ for the value of temperature T which they predict for the time tn when the query was entered. The individual models may return their prediction value and this may be compared with the value x of the query. For some of sensors the values of the prediction models corresponding to the sensors return values which meet the search condition T=x. In the example shown in Fig. 2 this is the case for the sensors $S_a$, $S_b$, and $S_c$ among the sensors $S_1$ to $S_k$. These sensors are the ones where the mechanism returns "predicted hits", in other words the prediction models predict that a query or a reading of the real actual sensor values would return a sensor value which should match with the search condition. Therefore in the next step as shown in Fig. 2 the actual sensor values of sensors $S_a$, $S_b$ and Sc are read, and then the read values are again compared with the search condition T=x. In the example of Fig. 2 only for two of the read sensors, namely for sensors Sa and $S_b$ the actual sensor values match with the search condition T=x, and therefore the sensors $S_a$ and $S_b$ and their corresponding sensor values T=x are to be considered "real hits".

It will be readily apparent that the same mechanism can be applied also for other sensor types which read other parameters than temperature. Examples of such other parameters are e.g. pressure, the occupancy of a room or a location like a restaurant, or any other sensed value or parameter which can be measured over time (or in realtime) by a sensor.

Now a further embodiment will be described where the prediction model delivers not only a predicted sensor value but also a a probability of the correctness of the prediction. This further parameter can then be used to further enhance the performance of the mechanism by focussing on those sensors where the likelihood of success (the probaility of correctness) is higher than for others.

Similar to the previous embodiment a prediction value is calculated for each sensor, however furthermore a probability value for the correctness of the prediction is also calculated. Given a search term, the search engine can use these indexed models to compute the probability that a sensor will match the search term.

The resulting probability values can then be used to rank sensors according to their probability of matching a search term. This ranking can then be used to enhance the performance of the mechanism. E.g. the sensors that are most likely to match a search are consulted first to see if their current values do actually match the search term. In one embodiment there may be set a maximum number of hits which need to be derived, and the sensors are then consulted according to their ranking until there have been returned as many matching sensor values as were set by the maximum number.

More generally speaking, the probability of correctness of the prediction may be used to give higher priority to those sensors for which the prediction is more likely to be correct, so that those sensors are assigned a higher priority compared to sensors with a lower probability. This higher priority may then be reflected e.g. that those sensors where the probability is higher are read first or at higher priority compared to those for which the probability is lower. Also it is possible to introduce a "cut-off" limit in the sense that only those sensors are considered at all for which the probability exceeds a certain threshold.

According to a further embodiment the sensors are also ranked based on the probability value, and there is just defined a maximum number of sensors which are read, independent of whether they return a matching value or not. This avoids consulting too many sensor values in cases where all predictions are rather bad so that almost no matching sensor values are returned.

According to an even further embodiment the maximum number may be increased, e.g. by a predefined number, if none of the sensors defined by the maximum number returns a correct match.

In one embodiment the sensors are first ranked according to their probability value, and then they are checked in the order of that ranking whether the predicted value matches the search condition. In another embodiment at first those sensors are selected where the search condition matches with the predicted value, and then the found sensors are ranked according to their probability values.

In any of these cases, however, the probability values are used to assign higher priority to those sensors for which the probability of correctness of the prediction is higher.

Moreover, in all of these embodiments only fewer sensor values need to be read compared with reading all sensors were the prediction returned a predicted hit.

In the following a further embodiment will be explained in somewhat more detail.

Formally, a sensor can be seen as a function

$$s : T \mapsto V \ (1)$$

where T denotes real time and V the set of possible sensor values. Each sensor is associated with a type (e. g. for a temperature sensor the type may be "temperature", for a pressure sensor the type may be "pressure", and so on) and optionally further meta-information such as a location (e.g. in the form of co-ordinates or by a more abstract location information like the address or name of the city). For example, the following functions can be used to obtain the type Y and location L of a sensor.

$$type : S \mapsto Y \ (2)$$

$$location : S \mapsto L \ (3)$$

A prediction model for a sensor s can be seen as a function

$$m_{s,t_0} : T \times V \mapsto [0,1] \ (4)$$

The parameter $t^0 \in T$ refers to the time when the model has been constructed, meaning that all sensor values $s(t' \leq t^0)$ have been available for the construction of the model. Given a point in time $t \geq t^0$ and a sensor value $v \in V$, $m_{s,t0}(t,v)$ is an estimate of the probability that $s(t) = v$ holds. One may call $t - t^0$ the forecasting horizon.

According to one embodiment prediction model is associated with a confidence value that characterises the accuracy of predictions produced by the model. The following function computes the confidence of a model, where $M$ is the set of all prediction models. A perfect prediction model has a confidence value of 1.

$$confidence : M \mapsto [0,1] \ (5)$$

For example, a confidence value may be calculated based on differences between predicted values and actually measured sensor values which have been found in the past. For example, in one embodiment a confidence value of a certain model for a certain sensor may be simply calculated based on adding the amounts of the difference between predicted and measured values, dividing the result by the number of measurements, and subtracting the resulting value from "1 ". The resulting values which is equal or smaller than 1 may be regarded as a condfidence value of the sensor For example, if for a certain sensor no differences have been found at all, the confidence value in this case will be "1", and the larger the differences between predictions and actualy read values were, the smaller the confidence value becomes. Such a confidence value may, according to one embodiment be used to rank the predictions according to their confidence value such that the ones where the confidence values are higher are ranked higher and the ones with lower confidence value are ranked lower. Such a ranking may then alternatively to the ranking based on the probability of correctness be used to read out the actual sensor values based on the ranking. It should be noted in this regard that the confidence value should to be distinguished from the probability of correctness, which is the probaility of correctness for a certain prediction, while the confidence value is an indication of the extent to which the prediction was correct in the past.

According to a previously explained embodiment the probability of correction is used for ranking the predicted values to give higher pririty ot those sensors where the predicted sensor value has a higher probability of correctness, and these sensors are then read out at higher priority to obtain the actual sensor values. However, it may happen that the prediction for a certain sensor always or often gives a high probability of correctness, nevertheless, when the atcual sensor value then is read out it turns out that in many or all cases the prediction - despite its high probability - was actually wrong. To avoid that in such cases this sensor will alway be read out again due to its high probability, the confidence value may be used as an additional criterion for the ranking of the sensors the actual values of which should be read out. For example, a total ranking parameter may be calculated based on the probability multiplied with the confidence value, and such an approach would then give a lower priority to those sensors where the probability is high but the confidence is relatively low.

Other approaches how the confidence value may be used to influence the ranking of the sensors and their predictions to establish a priority according to which the actual sensor values are to be read out can of course be used as well. For example, the ranking of the predictions may just alone be based on the confidence value. In another embodiment a combined ranking parameter which is based on a combination of the probability of correctness and the confidence value may be used for ranking the predictions. Such a combined ranking parameter may be a product of confidence value and probability, or any other combination of these two values. According to the thus established ranking then the actual sensor values may be read out.

Now in somewhat more detail a procedure for processing a search query according to one embodiment will be described. According to one embodiment, given a search term looking for sensors of type $y$ having value $v$ at time $t$, the search engine would compute the probability of correctness $p_i := m_{s,t0}(t,v)$ for all indexed sensors $s_i$ with $type(s_i) = y$, and sort (i.e., rank) these sensors by descending values $p_i$. The top ranking sensors are then consulted to check whether indeed $s_i(t) = v$ holds. The matching sensors are returned as search results.

Such a prediction is feasible based on the fact that most user related services are also mostly concerned with sensor data characterising the behaviour of humans. Since human beings are creatures of habit, sensor data can often be expected to show a certain periodic behaviour, which can be exploited by the prediction models. But even where the data is not based on human behaviour, a prediction of sensor values may be possible based on known methods for analysing and forecasting time series. An example of models for forecasting time series are the so-called autoregressive moving average (ARMA) models or Box-Jenkins models. An introduction into these models and how they can be applied to forecasting or prediction can e.g. be found in the book of Box, Jenkins, and Reinsel "Time Series Analysis: Forecasting and Control, 3rd edition, Prentice-Hall 1994. The skilled person may however apply any suitable model which is appropriate for returning a predicted value based on past measurements, e.g. neural networks as described e.g. in Patterson D W, Chan K H, Tan C M 1993, Time Series Forecasting with neural nets: a comparative study, Proc. The international conference on neural network applications to signal processing, NNSAP 1993, Singapore, pp 269-274.

One concrete example of a prediction algorithm which can be used for an embodiment of the present invention will be explained in somewhat more detail in the following. In this example the sensor type is a sensor which senses the occupancy of a room which may be one of two states, either empty or occupied.

The output of such a sensor (such as room occupancy) shows some periodic behaviour, that is, the output of a sensor in the past can be used to predict its value in the future

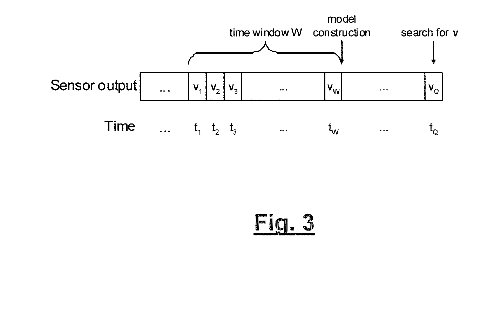

Fig. 3 now illustrates the basic prediction approach. Time advances from left to right in discrete steps. At time $t_i$, the sensor generates output value $v_i$, which is a discrete value such as "room occupied" or "room free". At time $t_W$, a prediction model P is constructed using the recent output values $v_1, ..., v_W$ of the sensor contained in a time window of user-specified size W. The idea behind the use of a time window is that sensor values from the distant past are a poor indicator of what can be expected from the sensor in the near future. At time $t_Q$, a user poses a search for sensors that currently output a value v. One may assume that the output of the exemplary sensor in the above Fig. 3 is $v_Q$ at the time when the search is posed. One can now apply the prediction model P to compute the probability that $v_Q=v$ at time $t_Q$ by computing $P(t_Q,v)$ without actually knowing $v_Q$.

Probably the most simple prediction model is to compute the fraction of the time during which the sensor output equals v during the time window, that is:

$$P(t_Q, v) = \frac{\displaystyle\sum_{1 \le i \le W \,\wedge\, v_i = v} 1}{W}$$

That is, if the sensor output was "room free" during the whole time window, then the probability computed by the prediction model that the room will be free at the time of the search equals 1. It should be noted that the output of the prediction model is independent of the actual point in time when the search is posed.

A more elaborate model would take into account the time when the search is posed. This is reasonable as the occupancy of a meeting room, for example, is likely to be different on Mondays than on Sundays. A further fundamental assumption of this model is that there is a dominant period length L after which the sensor output is likely to repeat. For example, it is reasonable to assume that the occupancy pattern of a room is likely to repeat every week, that is L = one week. For the ease of exposition one may assume that W is an integral multiple of L and that Q-W < L (i.e., the time between construction of the model and the search is smaller than the period length). Both limitations can be easily removed. The output of the prediction model would then be computed as follows:

$$P(t_Q, v) = \frac{\displaystyle\sum_{1 \le i \le W/L \,\wedge\, v_{Q-i\cdot L} = v} 1}{W/L}$$

The overall approach is similar as in the time-independent model, here the computation to sensor values are constrained at a certain offset in each period. For example, if the search is posed on Monday, one only consider the sensor output on Mondays in the time window.

The previous model ignores the fact that sensor output is often the result of many independent periodic processes with different period lengths. For example, a meeting room may host a group meeting every Monday and a general assembly every first Tuesday of each month. Here, we have two periodic processes with period lengths of one week and one month, respectively. To support such multi-period processes, one may use the following approach. In a first step, there are discover so-called periodic patterns in the time window using a variant of a pre-existing algorithm which is described in Mohamed G. Elfeky, Walid G. Aref, and Ahmed K. Elmagarmid: Using Convolution to Mine Obscure Periodic Patterns in One Pass, EDBT 2004.

As a result, there is obtained a list of periodic patterns of the form (s, o, w, p), where s is the period length of the pattern, o is an offset in the period such that the sensor output $v_{k \cdot s + o}$ equals w for integer values k with probability p. For example, the pattern (1 week, 1, occupied, 0.5) means that every first day in a week (i.e., Monday) a room is occupied with probability 0.5. The algorithm described in Elfeky et al. which is used to find these patterns expects a probability threshold $p_{min}$ and outputs all periodic patterns with $p \ge p_{min}$.

To make a prediction, at first there are filtered all patterns that match the search time $t_Q$, that is we keep a pattern (s, o, w, p) if and only if there exists some integer k such that k.s+o = Q and w = v, where v is the sought sensor value. One may assume that N such patterns exist. One can then compute the prediction probability as follows:

$$P(t_Q, v) = 1 - \prod_{1 \le j \le N} 1 - p_j$$

Where $p_j$ is the probability of periodic pattern j. This equals the probability that at least one of the N matching patterns actually holds at the time of the search, assuming that the periodic processes underlying the periodic patterns are independent of each other.

For example, one may assume that there is posed a search on a Monday searching for occupied rooms. Further one may assume that there have been filtered two periodic patterns, one saying that each Monday a room is occupied with probability 0.5 and the second saying that each first Monday in a month a room is occupied with probability 0.5. According to the above equation one would then obtain 0.75 as the probability that at least one of these two patterns holds.

This prediction model may then be applied to multiple sensors, as was described in connection with the previous embodiments, e.g. in connection with Fig. 2.

It will be appreciated that this example is just one possibility how a prediction model can be applied, and the skilled person will recognise that other prediction models may as well be used for the purpose of prediction and for returning a probability of correctness for the prediction.

According to one embodiment the search condition may include an indication of a time, typically a moment of time t in the future, and then the prediction of the sensor value is made for the time indicated in the search condition. The search engine will then return those sensors for which the sensor value which is predicted for time t matches the inputted sensor value search condition.

The most simple way of inputting the time t is of course by not explicitly specifying any time t. In this case, according to one embodiment the prediction is made for the time t at which the search was inputted.

According to one embodiment the sensor value inputted into the search condition may take the form of a value range. This allows a more flexible searching of sensors.

Furthermore, according to one embodiment a match between a sensor value included in the search condition and a predicted sensor value is considered to have been found if the difference between the predicted value and the sensor value of the search condition lies within a certain range of tolerance. This also may increase the flexibility and the tolerance of the search process. The tolerance may be predefined or defined by the user.

The embodiments described so far make it possible to achieve several advantages, e.g.:

- Dynamic changes can be filtered close to the source (sensor), because prediction models can be built close to the sensor, such that no raw sensor data streams have to be transmitted.
- Although the system uses prediction-based methods, the results can be verified before sent to the user, such that the system produces actually exact results.
- The use of prediction models allows for search queries into the future at time t (e.g., show me connection trains that won't be crowded when I will be there to embark them). In these cases, the search result can of course not be verified before the future event becomes reality.
- Verifying prediction results has the advantage that the accuracy of certain models in general or for a specific type of sensors can be evaluated. The results can be used to exchange the type of prediction model used for a specific sensor type and to control the indexing frequency (e.g., index prediction models more often if the model is inaccurate).

In the following there will be described a further embodiment in somewhat more detail that allows for building search engines for sensors that scale to large numbers of sensors and queries, as well as can cope with the dynamic nature of sensor data.

The architecture in one embodiment is based on architectural concepts of the World Wide Web, such as URLs as an addressing mechanism, HTTP as a transport protocol and a mark-up language as a content description language. This approach allows for the easy integration of sensors into the existing Web.

For similar reasons one may reuse existing service infrastructures of the Web wherever possible. For example, one may exploit existing search engine technology for indexing and searching sensors wherever this is possible and sensible.

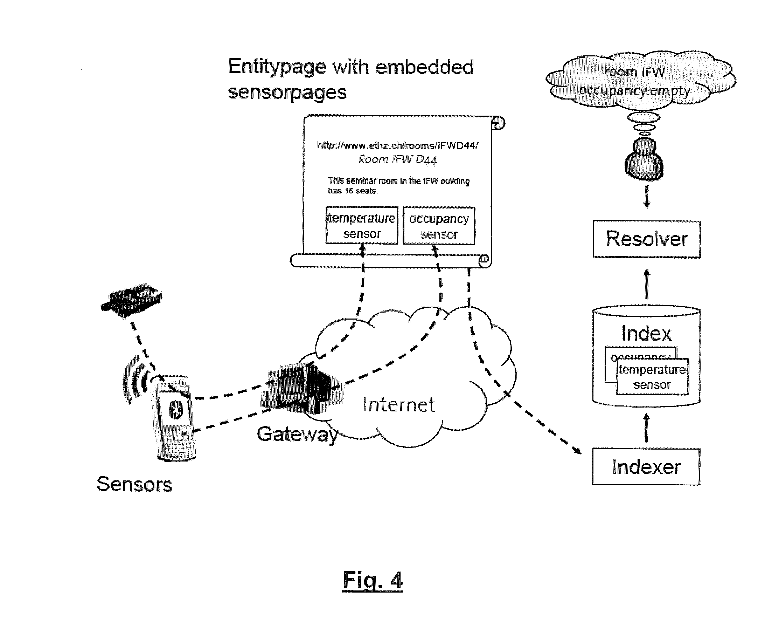

Fig. 4 schematically illustrates the components and operation of such an embodiment.

In the following there will be briefly described the main architectural components and their interplay as depicted in 4.

**Sensors** are implementations of functions $s : T \mapsto V$, producing a sensor value $s(t) \in V$ when read out at time $t \in T$. In one embodiment, sensors built into or connected to mobile phones are of particular interest, but other sensors may be included as well.

**Physical and virtual sensors.**

Physical sensors are sensors whose output values are directly generated by a hardware sensor (e.g., a temperature sensor). The output of virtual sensors is computed from the output of one or more other physical or virtual sensors. For example, a room occupancy sensor could be implemented by a virtual sensor, whose output is derived from a (physical) air humidity sensor (human breath increases air humidity).

**Gateways** connect sensors to the Internet and to the Sensor Web. Gateways are computers with plentiful resources (compared to sensors) that are connected to both the Internet and to one or more sensors, translating proprietary protocols offered by sensors into Web protocols such as HTTP. Further, according to one embodiment gateways compute prediction models for sensors.

**Sensorpages** represent sensors in the Sensor Web. Addressed by URLs, sensorpages provide access to a sensor, i.e., its current value and possibly also historical values, its prediction model, its type, and possibly further meta-information (e.g., location) in a Web-compatible format such as an HTML page.

**Entitypages** are the units that can be searched for by the search engine according to one embodiment. Essentially, these are HTML pages (addressed by a URL) describing a certain place or thing, containing both static information (e.g., a verbal description of the place or thing entered by a human being) and embedded sensors. The latter may be achieved by specifying the URL of a sensorpage. However, rather than just referencing a sensorpage through a link, the content of the sensorpage (i.e., current sensor value, type, etc.) is embedded into the entitypage, much like the HTML tag <img> allows to embed an image with a given URL into a Web page. The idea behind this concept is that the embedded sensors represent dynamic properties of a place or thing (e.g., a room is currently occupied). The exemplary entitypage shown in Fig. 4 includes two types of sensors, one being a temperature sensor and one being an occupancy sensor. Further shown in Fig. 4 is the URL of the entitypage, the room name IFW D44 as metainformation about the location of the sensor, and further metainformation indicating that the room is a seminar room having 16 seats.

The search index (which will be described in more detail below) is a data structure holding information on entitypages. In particular, the search index in one embodiment stores the prediction models of sensors that are embedded into entitypages.

The indexer (which will be described in more detail below) crawls the (Sensor) Web, looking for entitypages, extracting information on the embedded sensors and building up the search index.

The resolver (which will be described in more detail below) accepts a search term through a user interface and returns the URLs of entitypages that match the search term. In one embodiment a search specifies certain static properties (e.g. type of the sensor, such as "temperature sensor" and dynamic properties (e.g., current value of an embedded sensor) of the sought entitypages.

### Search Index

The search index stores information about the sensorpages that are embedded into entitypages, allowing the resolver to rank sensors using prediction models as described in connection with the previous embodiments. In one embodiment there is one entry in the index for each entitypage, consisting of the URL of the entitypage and one subentry for each embedded sensorpage. The latter contains a subset of the information available on the sensorpages, e.g. the sensor type, the prediction model, and the latest value seen from this sensor along with the time when this value was obtained. The search index in one embodiment is a collection of entries, each entry for each entity page, where the ordering of the entries may be arbitrary. Therefore the search index in one embodiment is somewhat different from a "classical search index" where the entries are ordered based on the parameter over which the index is formed and against which a search term can be directly matched by scrolling through the index. Instead, in one embodiment for all entries of the search index the prediction value has to be calculated and has to be matched against the search term.

Now there will be described an embodiment which makes use of precomputing for reducing the resources necessary to perform the actual matching. The main purpose of the index is to allow sensor ranking, where the prediction models of sensors are retrieved from the index to compute a matching probability for each sensor. As a result of this procedure, only few sensors need to be consulted to download their current values, as the number of results displayed at a time to the user is expected to be limited. However, evaluating the prediction models for a large number of sensors can be a costly operation in terms of necessary resources.

To reduce the overhead of the ranking computation process, one can trade off space for computation by precomputing the ranking results for all sensor types, all possible sensor values, up to a certain prediction horizon. The resulting lookup table in one embodiment may then be included in the index.

By this, obtaining the ranking for a certain search term could be implemented by performing a simple lookup in the index, i.e., the ranking computational overhead does no longer depend on the number of sensors that are to be ranked for a search. Often the ranking results will be identical or similar for similar prediction horizons, which in one embodiment could be exploited for compression.

### Indexer

The indexer is the module which generates the index. To populate the index, the indexer in one embodiment locates and download entitypages. To locate entitypages, there may be used existing search engines, using a magic string included in every entitypage as a search term. The magic string is a special ID (e.g. a globally unique identifier GUID) that "tags" entity pages in a classic search engine (like google). Using the magic string as a search keyword all entity pages can be retrieved from a normal internet search engine.

Another possibility would be to build a new search engine designed for the purpose of searching sensorpages (or entitypages), where the crawler of the search engine already is able to filter only entitypages such that by the crawling process already only those pages are found which are entitypages.

The found entitypages are downloaded, information about sensors is extracted and stored in the index. This process will be repeated periodically; where the frequency depends on the time it takes to index all entitypages.

According to one embodiment there may be exceptions to periodic reindexing. For example, according to one embodiment the resolver may ask the indexer to refresh a certain sensor in the index, downloading the latest sensor value and prediction model and updating the information in the index.

Furthermore, according to one embodiment the accuracy of prediction for some sensors may be better than for others. The confidence of a prediction model as defined in Eq. 5 can be a measure for this accuracy.

The indexer may use this information to increase the indexing frequency for sensors with low confidence. Typically, the prediction accuracy of a model depends on the forecasting horizon. Since frequent indexing reduces the forecasting horizon, one may expect an increased prediction accuracy by updating prediction models more frequently.

Against the index built by the indexer module there can then be run a search query. The actual running of the search query is preformed by a module called resolver which will be described in more detail below.

### Resolver

A search term may in one embodiment consist of a static part and a dynamic part. The static part e.g. refers to the static fraction of an entitypage and to the static meta-information of embedded sensorpages, while the dynamic part refers to the current values of embedded sensors.

To find entitypages (or actually the sensors) matching a search term, the resolver performs the following steps.

1. The search term is parsed to separate the static part from the dynamic part.

2. The static part is used to formulate a search term for an existing search engine to find all entitypages that conform with the static part of the search term.

3. From the resulting set of entitypages, all pages are removed which do not include sensor types that match the ones given in the dynamic part of the search term.

4. The index then is consulted to rank the entitypages according to the probability that embedded sensors have a current value that matches the dynamic part of the search term.

5. Starting with the top ranked entitypages, the indexer is triggered to download the latest values of embedded sensors unless a recent sensor value is already present in the index. The actual values are used to check whether the entitypage does indeed match the search term, in which case the entitypage is included in the result list.

6. Finally, the result list is displayed to the user, for example as a list of URLs or on a map-based interface.

It will be understood by a skilled person that this sequence is just conceptually sequentialized. Some steps, for example, may be processed together, in parallel or the order of the sequence may be changed to provide higher efficiency.

As one can see from the sequence, the resolver is in fact a filter or a filtering module, which removes all nonconforming results from a given data set until only results conforming to the search set or the search condition remain.

According to one embodiment the ranking of the final results which are displayed to the user can be based on the confidence value which is an indication how accurate the prediction of the sensor values has been in the past. Those sensors which have a higher accuracy (a higher confidence ) may be ranked higher than others. According to one embodiment the confidence value may be an additional parameter which influences the final ranking, e.g. additionaly to conventional ranking methods like page ranking. According to a further embodiment it does not influence the final result ranking, and the final result ranking is based on other mechanisms, e.g. based on the ranking of the search engine by whcih the method is implemented, e.g. by the page rank algorithm. It may, as mentioned before, however, influence the ranking of the predictions thereby influencing which sensor values are read out first.

According to one embodiment a stability value may be calculated which indicates the probability that the predicted value will not change over time. E. g. the prediction values may be calculated for a time interval [t;t+x], and based thereupon there may be calculated the probability that the predicted value will not change over the time x. Those sensors for which the stability value is higher may then be ranked higher in the final output than those for which the stability value is lower.

**Search Interface**

Through the search interface a user may input his search query by a search language which resembles and may in one embodiment be implemented as an extension of the syntax of today's Internet search engines. Their syntax e.g. may be based on keywords and may offer a basic set of operators to construct more complex search terms. Additionally, the user may include properties (a tuple consisting of name, value) which are resolved according to the semantics defined by the search engine. For example, to only include HTML pages having the word "sensor" in their title in the results, one may have to add the statement intitle:sensor in the search term. Similar to this concept, there may be allowed the specification of desired sensor characteristics by using properties. For example, activity:low would only include entitypages in the result which have an embedded sensor of type "activity" that is currently reading "low".

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a computer or a computer network which is suitably programmed such that it is able to carry out a mechanism as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

**Claims**

1. A method for searching a plurality of realtime sensors based on an inputted search condition including a sensor value to find those sensors where the realtime sensor value read by the sensor matches with the search condition, said method comprising:

based on a prediction model which predicts future sensor values based on sensor values measured in the past, performing a prediction for the sensor value and selecting those sensors whose predicted sensor values match with the search condition,

reading the actual realtime sensor values of those sensors which were selected based on said prediction values; and

returning those sensors and/or their sensor values for which the read actual realtime sensor values match with the search condition.

2. The method of claim 1, wherein instead of reading the actual realtime sensor values only the sensors for which the predicted sensor value matches with the search condition, preferably together with the predicted values, are returned in response to a search query.

3. The method of claim 1 or 2, wherein said prediction model in addition to the predicted sensor value returns a probability for the correctness of the prediction, and further comprising:

using said probability for giving a higher priority to those sensors for which the probability is higher compared to those sensors for which the probability is lower.

4. The method of one of the preceding claims, comprising:

calculating for all sensors a predicted sensor value and a ranking parameter for ranking the predictions based on the ranking parameter;
ranking the sensors for which the predicted value matches with the search condition according to their ranking parameters; and
reading the actual sensor values in accordance with the ranking of the sensors; wherein said ranking parameter comprises one of the following:

a probability for the correctness of the prediction;
a confidence value indicating the accuracy of past predictions;
a parameter based on probability for the correctness of the prediction and a confidence value indicating the accuracy of past predictions.

5. The method of one of the preceding claims, wherein said search condition includes an indication of a time t, said method further comprising:

predicting the sensor values of said plurality of sensors for said time t together with a probability of correctness of the prediction;
ranking the predicted sensor values which match with said sensor value included in said search condition according to their corresponding probability; and
returning those sensors for which the predicted search values match with the sensor value of the search condition based on said ranking.

6. The method of one of the preceding claims, wherein said sensor value inputted into said search condition may take the form of a value range, and/or wherein a match between a sensor value included in said search condition and a predicted sensor value is said to have been found if the difference between said predicted value and the sensor value of said search condition lies within a certain range of tolerance.

7. The method of one of the preceding claims, comprising:

precomputing the predicted sensor values and/or their corresponding probabilities of correctness of the prediction for a certain time horizon; and
matching a search criterion against said precomputed values to obtain said search results.

8. The method of one of the preceding claims, comprising:

building an index by searching webpages to find webpages which contain information about sensors and to extract such information including a prediction model for the corresponding to the sensor; and
ordering said information about said sensors including said prediction models to thereby build an index of sensors and their corresponding prediction models.

9. The method of one of the preceding claims, wherein those sensors for which the prediction accuracy is lower are indexed more frequently than those for which the prediction accuracy is higher.

10. The method of one of the preceding claims, comprising:

selecting those sensors for which the static parts of the search query match, and based on the results
selecting those sensors for which the dynamic search conditions are met.

11. The method of one of the preceding claims, comprising:

ranking the final results returned in response to the query based on a confidence value which indicates for each sensor how accurate the prediction has been in the past.

**12.** The method of one of the preceding claims, further comprising:

calculating a stability value calculated which indicates the probability that the predicted value will not change over time, and
ranking the final results returned in response to the query based on said stability value.

**13.** An apparatus for searching a plurality of realtime sensors based on an inputted search condition including a sensor value to find those sensors where the realtime sensor value read by the sensor matches with the search condition, said apparatus comprising:

a module for performing based on a prediction model which predicts future sensor values based on sensor values measured in the past a prediction for the sensor value and selecting those sensors whose predicted sensor values match with the search condition
a module for reading the actual realtime sensor values of those sensors which were selected based on said prediction values; and
a module for returning those sensors and/or their sensor values for which the read actual realtime sensor values match with the search condition.

**14.** The apparatus of claim 13, further comprising:

a module for performing a method according to one of claims 2 to 12.

**15.** A computer program comprising computer program code which when being executed on a computer enables said computer to carry out a method according to one of claims 1 to 12.

**Fig. 1**

**Fig. 2**

Fig. 3

**Fig. 4**

**European Patent Office**

# EUROPEAN SEARCH REPORT

Application Number

EP 08 15 7818

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ILARRI S ET AL: "Processing of Data Streams with Prediction Functions" SYSTEM SCIENCES, 2006. HICSS '06. PROCEEDINGS OF THE 39TH ANNUAL HAWAI I INTERNATIONAL CONFERENCE ON KAUIA, HI, USA 04-07 JAN. 2006, PISCATAWAY, NJ, USA, IEEE, vol. 9, 4 January 2006 (2006-01-04), pages 237a-237a, XP010882482 ISBN: 978-0-7695-2507-5 * abstract * * page 1, left-hand column, paragraph 1 - page 2, right-hand column, paragraph 1 * * page 3, right-hand column, last paragraph - page 4, right-hand column, paragraph 5 * * page 5, left-hand column, last paragraph - page 5, right-hand column, paragraph 4 * ----- | 1-15 | INV. G06F17/30 |
| A | BOULIS ET AL: "SensorWare: Programming sensor networks beyond code update and querying" PERVASIVE AND MOBILE COMPUTING, ELSEVIER, NL, vol. 3, no. 4, 14 June 2007 (2007-06-14), pages 386-412, XP022117388 ISSN: 1574-1192 * abstract * ----- | 1-15 | TECHNICAL FIELDS SEARCHED (IPC) G06F |

The present search report has been drawn up for all claims

| Place of search | Date of completion of the search | Examiner |
|---|---|---|
| Munich | 23 July 2008 | König, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- A real-world event search system in sensor network environments in MDM '06. **Okadome, T. ; Hattori, T. ; Hiramatsu, K. ; Yanagisawa, Y.** Proceedings of the 7th International Conference on Mobile Data Management (MDM'06). IEEE Computer Society, 2006, 62
- Sensor-internet share and search-enabling collaboration of citizen scientists. **Reddy, S. ; Chen, G. ; Fulkerson, B. ; Kim, S. J. ; Park, U. ; Yau, N. ; Cho, J. ; Mark Hansen, J. H.** Proceedings of the ACM Workshop on Data Sharing and Interoperability on the World-wide Sensor Web. ACM, April 2007, 11-16
- Search in sensor networks: Challenges, techniques, and applications. **Wong, J. L. ; Potkonjak, M.** IEEE International Conference on Acoustics, Speech, and Signal Processing. IEEE Press, 2002, vol. IV, 3752-3755
- **Box ; Jenkins ; Reinsel.** Time Series Analysis: Forecasting and Control. Prentice-Hall, 1994
- **Patterson D W ; Chan K H ; Tan C M.** Time Series Forecasting with neural nets: a comparative study. *Proc. The international conference on neural network applications to signal processing, NNSAP,* 1993, 269-274
- **Mohamed G. Elfeky ; Walid G. Aref ; Ahmed K. Elmagarmid.** Using Convolution to Mine Obscure Periodic Patterns in One Pass. *EDBT,* 2004